# EUROPÄISCHE PATENTSCHRIFT

(11) **EP 0 394 279 B1**
(45) Veröffentlichungstag und Bekanntmachung des Hinweises auf die Patenterteilung: **12.01.1994**
(21) Anmeldenummer: 88907637.8
(22) Anmeldetag: 01.09.1988
(51) Int. Cl.: B60R 22/42, B60R 22/18

(54) **SELBSTSENSORISCHE KLEMMVORRICHTUNG**
SELF-DETECTING CLAMPING DEVICE
DISPOSITIF AUTO-DETECTEUR DE BLOCAGE

(30) Priorität: 07.09.1987 DE 3729907
(43) Veröffentlichungstag der Anmeldung: 31.10.1990
(73) Patentinhaber: GENERAL ENGINEERING (NETHERLANDS) B.V., NL-3581 CV Utrecht (NL)
(72) Erfinder: Ernst, Hans-Hellmut, D-22926 Ahrensburg (DE)
(74) Vertreter: Gossel, Hans K., Dipl.-Ing.
(86) Internationale Anmeldenummer: DE8800534
(87) Internationale Veröffentlichungsnummer: WO8902378

(56) Entgegenhaltungen:
- EP-A- 0 056 894
- EP-A- 0 186 105
- WO-A-86/00585
- DE-A- 2 259 692
- US-A- 3 237 729

## Beschreibung

Die Erfindung bezieht sich auf eine Klemmvorrichtung mit einem sensorgesteuerten, auf eine Beschleunigung bzw. Verzögerung und auf Gurtzug ansprechenden, einen Sicherheitsgurt festklemmenden, verschiebbar angeordneten Klemmkeil innerhalb eines Klemmgehäuses.

Klemmvorrichtungen für Gurte in Sicherheitsgurtsystemen sind bekannt. Sie werden eingesetzt, um die Arretierung des Gurtbandes ohne nennenswerten Wegverlust zu realisieren, z. B., um den Filmspuleneffekt im Aufroller zu vermeiden. Das wesentliche Qualitätsmerkmal einer Klemmvorrichtung äußert sich in einem minimalen Schlupf, d. h., in dem geringstmöglichen Gurtauszug bis zur Maximallast. Ein geringstmöglicher Gurtauszug bedeutet eine wirkungsvolle Rückhaltung der Insassen und z. B. eine Vermeidung des Kopfaufpralls auf das Lenkrad.

Die Leistungskriterien einer Klemmvorrichtung sind:
- hohe Belastungsfähigkeit
- minimaler Schlupf - geringer Gurtauszug
- selbsttätige Deblockierfähigkeit
- einfacher konstruktiver Aufbau - kostengünstige Lösung
- kleines Bauvolumen und
- geringes Gewicht
- keine Komfortbeeinträchtigung (z.B. durch Umlenkungen).

Mit der gattungsbildenden GB-A-1.005.301 ist eine von einem Aufroller unabhängige, selbstsensorische Klemmvorrichtung gleicher Gattung bekannt geworden. Über ein Hebelgestänge wird eine drehbare Druckwalze gegen das Gurtband geführt. Diese Vorrichtung weist zwei gravierende Nachteile auf. Bei der Zustellbewegung der drehbaren Druckwalze gegen das Gurtband entsteht ein sehr großer Schlupf, bis das Gurtband zuverlässig geklemmt wird. Daraus resultiert ein schlechter Klemmerwirkungsgrad. Außerdem entsteht beim Klemmen nur eine Linienbelastung. Die Druckwalze erzeugt gegen das Gurtband eine hohe Quetschkraft mit einer Gurtrißgefahr. Nur eine sehr niedrige sichere Belastungsfähigkeit ist die Folge.

Bei der DE-A-32 42 783 ist durch die große Klemmfläche des Klemmkeiles die spezifische Flächenpressung nicht mehr das Problem. Die beidseitig des Gurtbandes - also auch an der statischen Druckfläche - angeordneten reibintensiven Klemmbeläge haben eine nachteilige Wirkung auf die Belastungsfähigkeit im Unfall. Der Lastaufbau (Kraftanstieg) erfolgt dann schlagartig. Das Gurtband verhält sich bei einer schlagartigen Verklemmnung sehr sensibel. Insbesondere dann, wenn Relativbewegungen unter hoher Reibung und hohem Druck stattfinden.

Die bei hoher Reibung auftretenden hohen Temperaturen (Reibungswärme wie bei einer Bremse) schädigen das textile Gewebe des Gurtbandes mit der Gefahr des Gurtrisses. Dies ist bei der Klemmeinleitung im Crashfall bei der DE-A-32 42 783 der Fall. Wenn sich der Keil in den Spalt schiebt, findet bis zum Erreichen der maximalen Last eine Relativbewegung zwischen dem Gurtband und dem feststehenden hochreibintensiven Klemmbelag statt, Außerdem weist diese Vorrichtung keine selbsttätige Deblockierung auf.

Auch findet die Klemmeinleitung mit einem relativ großen Schlupf statt, da die Klemmfläche des Keils zum Gurtband nur aus einem glatten Reibbelag besteht, der nicht sofort, sondern erst ab einem bestimmten Druck das Gurtband sicher über reine Reibung halten kann. Der durch den Anfangsschlupf bedingte große Gurtauszug bedingt einen ungünstigen Klemmerwirkungsgrad.

Bei der Klemmvorichtung nach der EP-A-0 087 499 kann zwar davon ausgegangen werden, daß eine selbsttätige Deblockierfähigkeit vorliegt, wenn die Lagerung der 4 Klemmhebel sorgfältig erfolgt und die geometrischen Daten entsprechend gewählt werden. Der konstruktive Aufwand dieses Gerätes ist aber sehr erheblich. Außerdem baut es durch die beidseitig des Gurtbandes angebrachten Klemmorgane und das lange Sensorpendel sehr groß. Der entscheidende Nachteil besteht aber darin, daß die Ansprechemfpindlichkeit nur beim Frontal- und Heckaufprall gegeben ist, also nicht in alle Richtungen der Ebene, was sicherheitstechnisch wünschenswert/erforderlich ist.

Ähnliches gilt auch für die DE-A-34 23 081, die darüberhinaus auch noch teure Permanentmagnete erfordert.

Ganz extrem aufwendig und insofern hinsichtlich eines Serieneinsatzes nicht mehr realistisch ist der Vorschlag einer selbstsensorische Klemmvorrichtung gem. der DE-A-36 20 820.

Aus der US-A-4.360.171 schließlich wird die Problematik deutlich, die beim Klemmen des Gurtbandes besteht, nämlich die Gefahr, das Gurtband als tragendes Element im Sicherheitsgurt durch den Klemmvorgang zu beschädigen und in seiner Belastungsfähigkeit zu beeinträchtigen. Deswegen wird in der US-A-4.360.171 vorgeschlagen, statt des Gurtbandes ersatzweise ein Stahlseil zu verklemmen. Ähnliches wird auch in der DE-A-22 34 157 vorgeschlagen. Bei sorgfältiger Abstimmung der Klemmperiferie (Materialwahl, konstruktive Feinabstimmung, Reibpartner und Klemmgeometrie) kann auf diesen zusätzliche Aufwand verzichtet werden.

In der US-A-4.128.261 wird eine selbstsensorische Klemmvorrichtung vorgeschlagen, die einen erheblichen Nachteil hinsichtlich des Komforts aufweist. Die Gurtbandumlenkung von ca. 300° beeinträchtigt den Tragekomfort des Gurtes (Schulterdruck) negativ. Außerdem wird nach ca. 100-200 Klemmungen das Gerät funtkionsuntüchtig, da das Gurtband völlig abgespult und die Triebfeder entspannt sein wird. Dies ergibt sich durch den nicht zu vermeidenden Schlupf des Gurtbandes auf der angetriebenen Trommel.

Die Aufgabe der Erfindung besteht somit darin, eine Klemmvorrichtung der eingangs genannten Art zu schaffen, die die genannten Nachteile des Standes der Technik vermeidet und folgende wünschenswerte Eigenschaften - insbesondere auch im Hinblick auf eine Großserie - aufweist:
- Ansprechempfindlichkeit in allen Richtungen der Ebene
- Kurze Gurtauszüge mit minimalem Schlupf im Lastfall
- Schonende Klemmung des Gurtbandes ohne Beeinträchtigung, also sichere Belastungsfähigkeit
- Kleines Bauvolumen
- Einfacher konstruktiver Aufbau, wenig Teile, kostengünstige Bauweise
- geringes Gewicht
Diese Aufgabe wird erfindungsgemäß durch die im Kennzeichnungsteil des Patentanspruches 1 und den Unteransprüchen angegebenen Maßnahmen gelöst.

Die vollständige Gleitbeschichtung des Klemmkeiles bewirkt einerseits ein leichtgängiges Verfahren des Klemmkeiles und unterstützt somit auch die Deblockierfähigkeit und andererseits einen schonenden Eingriff der Klemmzähne in das textile Gewebe des Gurts. Dies wird durch die Gleitbeschichtung der Funktionsflächen des Klemmergehäuses, also der Schrägfläche und der Druckfläche, unterstützt. Insbesondere die Gleitbeschichtung der Druckfläche, gegen die ja im Klemmfall mit einer Relativbewegung das Gurtband gepreßt wird, bewirkt eine niedrige Temperaturentwicklung und somit eine schonende Gurtklemmung, die die Belastungsfähigkeit nicht beeinträchtigt. Die Klemmeinleitung erfolgt im Unfall auf einfachste und direkte Weise durch 2 Sensorkugeln, die zwischen Kegelflächen oder Kalotten des Klemmkeiles und eines Lagers angeordnet sind. Die Verzögerungskräfte aus den Sensorkugeln und einer zusätzlichen Sensormasse bewirken ein Auslenken der Sensorkugeln, woraus ein Hub des Klemmkeiles entlang der Führungsflächen resultiert.

In Relation zu seiner Wirksamkeit ist ein Klemmkeil das kleinste, einfachste und kostengünstigste Klemmorgan. Ebenso ist die Kugel das einfachste und kostengünstigste Sensororgan. Auch die Realisierung der Gleitparameter auf den Funktionsflächen durch ein automatisches Pulver- oder Flüssigkeitsbeschichtungsverfahren stellt eine kostengünstige Lösung für die Großserie dar.

Schließlich trägt auch die einstückige Bauausführung des Klemmergehäuses, vorzugsweise aus einem Aluminium-Druckguß, zu einem preiswerten und einfachen Geräteaufbau bei.

Die Verwendung eines Klemmkeiles als Klemmorgan und der Einsatz des direkt wirkenden Kugelsensors garantiert eine kleinvolumige Bauausführung, die im gesamten Bereich der B-Säule zwischen Aufroller und Umlenker zum Einsatz gelangen kann.

Auch ermöglicht die Materialauswahl (Klemmkeil aus Kunststoff, Klemmgehäuse aus Alu) ein geringes Gewicht der Vorrichtung.

Bezüglich der für einen Klemmer wichtigen Leistungskriterien ist neben der bereits erwähnten hohen Belastungsfähigkeit die Klemmeinleitung auf kürzestem Wege von außerordentlicher Bedeutung. Bei der erfindgungsgemäßen Klemmvorrichtung liegt der Gurtauszug, an der Umlenkrolle gemessen, bis zur Last von 10 kN unter 5 mm. Das ist ein hervorragender Wert. Wesentlichen Anteil an der Realisierung dieser Werte hat die Klemmverzahnung, die im Klemmfall einen Reib-Formschluß mit dem Gurtband eingeht. Dadurch kann der Schlupf vermieden werden, der bei glattflächigen Reibbelägen zwangsläufig entsteht.

In den Zeichnungen ist ein Ausführungsbeispiel der Erfindung wiedergeben.

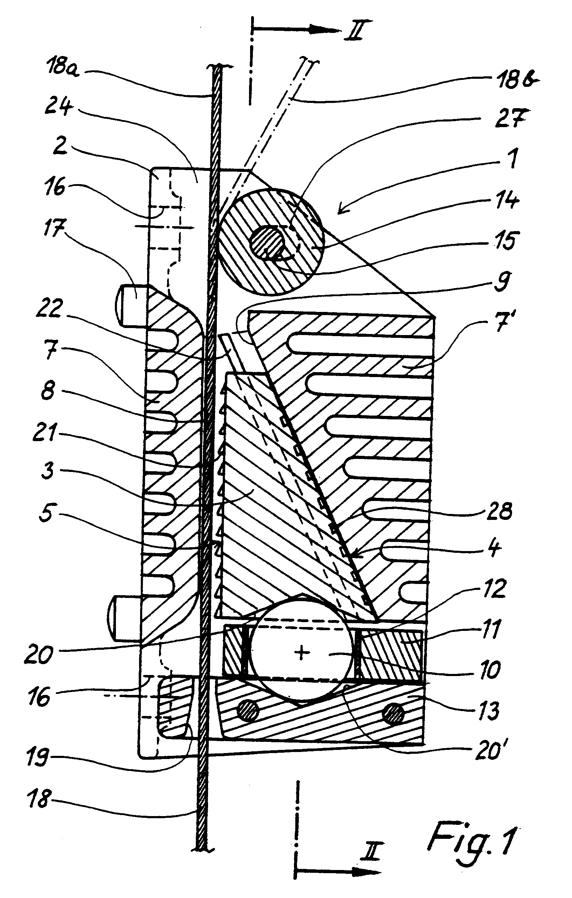

Es zeigen:
- Fig. 1: Die erfindungsgemäße Klemmvorrichtung im Schnitt

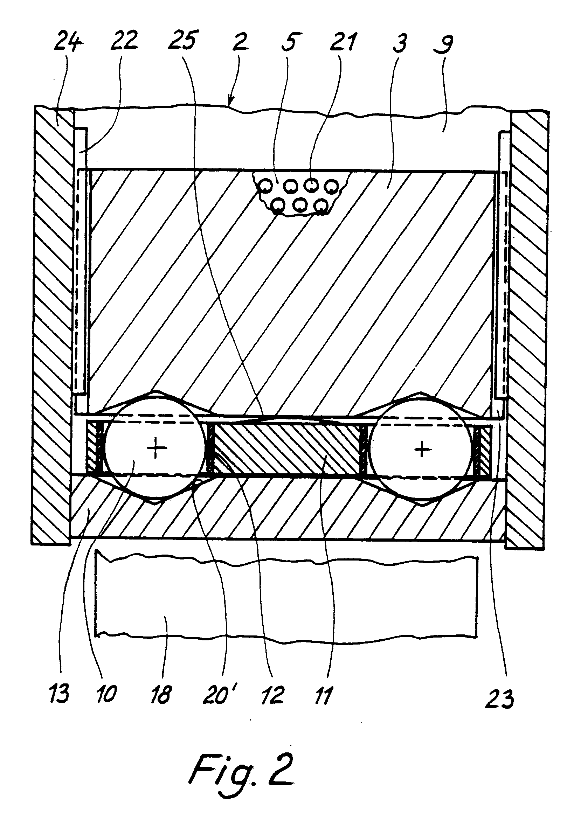

- Fig. 2: Eine Schnittdarstellung der Fig. 1.
- Fig. 3: Das Klemmsystem in einer Umlenk-Klemm-Vorrichtung
Die Anordnung der selbstsensorische Klemmvorrichtung 1 kann an jeder Stelle der B-Säule zwischen Aufroller und Umlenker erfolgen. Bei den heutigen, widerstandsarm ausgelegten Fahrzeugen ergeben sich wegen der Reduzierung der Stirnflächen in mittlerer Höhe relativ stark abgeknickte B-Säulen. Dieser Knick in der B-Säule, der ohnehin irgendeine Art Gurtführung hinter der Verkleidung erfordert, ist eine bevorzugte Anbringungsart für die erfindungsgemäße Klemmvorrichtung. Wie in der Fig. 1 dargestellt, verläuft dann das Gurtband 18b von der Umlenkrolle 14 geführt schräg nach oben zum nicht dargestellten Umlenker.

Das einstückig, vorzugsweise aus Aluminium-Druckguß hergestellte Klemmgehäuse 2 beinhaltet viele Funktionsteile. Die Befestigungsbohrungen 16, die dem Lasttransfer dienenden Stütznocken 17, die Druckfläche 8 mit den Rippen 7, die einer Durchbiegung entgegenwirken, die Schrägfläche 9, die ebenfalls mit Rippen 7' zur Abstützung der Klemmlast ausgebildet ist, sowie den Seitenwandungen 24, die die Achse 15 der Umlenkrolle 14 und die Lagerung 13 halten.

Bei der Montage wird der Klemmkeil 3 von unten in das Klemmgehäuse 2 eingeführt. Dabei übernehmen Führungsleisten 22 an den Seitenwandungen 24, die in Nuten 23 des Klemmkeiles 3 eingreifen, die Führung. Ebenfalls von unten wird sodann das Lager 13 mit den Sensorkugeln 10 in den Kegelflächen 20' und der zusätzlichen Sensormasse 11 in das Klemmgehäuse 2 eingeführt. Abschließend wird dann eine nicht dargestellte Zugfeder zwischen Klemmkeil 3 und Lager 13 sowie die Umlenkrolle 14 eingesetzt. Damit ist das Gerät bereits fertig montiert und einsatzbereit.

Im Unfall, z. B. einem Frontalaufprall, wirken - noch bevor sich der Insasse durch den Stoß nach vorne bewegt - die Verzögerungen auf die Massen der Sensorkugel 10 und der Sensormasse 11, die dadurch eine Lageänderung erfahren. Das Auslenken der Sensorkugeln 10 in den Kegelflächen 20 bewirkt einen Hub des Klemmkeiles gegen das Gurtband 18. Die Spitzen der kegelförmigen Zähne 21 dringen dabei in das Gurtband ein. Dieser Vorgang ist nach etwa 10 bis 15 Millisekunden abgeschlossen. Nach etwa 20 Millisekunden wird der Insasse nach vorne geschleudert und zieht dabei Gurtband aus. In der Klemmvorrichtung wird sowohl vom ausziehenden Gurtband, als auch von den von unten nachdrückenden Sensormassen 10 und 11 der Klemmkeil 3 in seine endgültige Klemmposition verfahren. Der horizontale Klemmweg des Klemmkeiles 3 beträgt dabei nur etwa 0,7mm. 0,5mm Eindringtiefe der Zähne 21 und etwa 0,2mm Kompression des Gurtbandes. Bei einem Klemmwinkel von 25° bedeutet das in veritkaler Richtung einen Gurtauszug von nur 2mm. Dieser theoretische Wert von 2mm bedeutet in der Praxis mit eventuellen Unwägbarkeiten (z. B. Dehnungen) auf jeden Fall einen realistischen Wert von unter 5mm bei einer Nennlast von 10 kN.

Zur Reibminderung, Korrosionsvermeidung und Geräuschdämmung können die Bohrungen in der Sensormasse 11 mit einer Gleitbuchse (12) ausgestattet sein. Ebenso kann aus Gründen der Vermeidung von Klappergeräuschen zwischen Klemmkeil 3 und Sensormasse 11 eine Kunststoffeder 25, z. B. in Form einer Tellerfeder, angeordnet werden.

Ist der Gurtverlauf nach oben nicht gerade, wie bei 18a, sondern schräg nach oben, wie bei 18b dargestellt, läßt sich auf einfache Art und Weise in die Klemmvorrichtung eine Gurtbandsensitivität integrieren.

Die entstehende Gurtzugkraft in einem Unfall lenkt die Umlenkrolle 14, entweder über eine Sollbruchstelle in der Achse 15 oder über eine federbeweglich in einem Langloch 27 angeordneten Achse 15 aus, so daß das Gurtband im oberen Bereich gegen die verzahnte Klemmfläche 5 des Klemmkeiles 3 gelangt. Der Mitnahmeeffekt über die Zähne 21 reicht aus, um die Klemmung einzuleiten.

Nach einem Unfall, wenn die Gurtzugkraft nachläßt, kehrt alles in seinen Ausgangszustand zurück. Die selbsttätige Deblockierfähigkeit ist aufgrund der Geometrie (Klemmwinkel), der Reibparameter und der Zugfeder gewährleistet.

In speziellen Fällen kann es von Vorteil sein, die rückwärtige Gleitfläche 4 des Klemmkeiles 3 mit kleinen Vertiefungen 28 (Taschen) zu versehen, die eine Gleitsubstanz, vorzugsweise eine Trockengleitpaste, aufnehmen können.

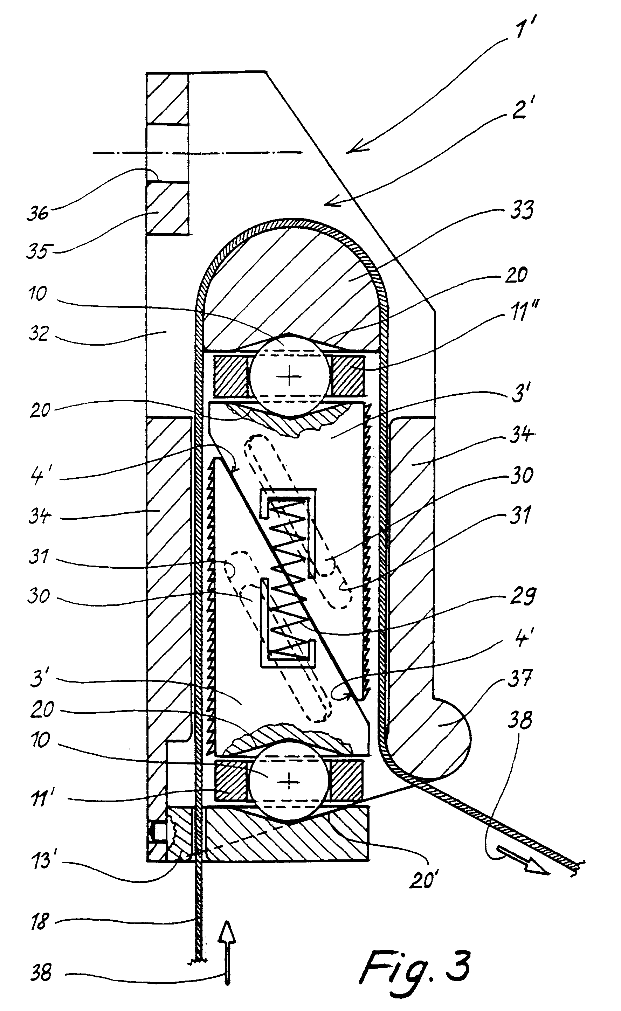

Wie die Fig. 3 zeigt, ist dieses Prinzip einer selbstsensorischen Klemmeinleitung auch bei einem Umlenkklemmer 1' anwendbar. Hierbei werden zwei identische Klemmkeile 3' übereinander mit den schrägen Gleitflächen 4' zueinander in einem Gehäuse 2' angeordnet. Das Gehäuse 2' besteht aus zwei Seitenschenkeln 32, die über einen Umlenksteg 33 und zwei Gleit-Klemm-Wänden 34 miteinander verbunden sind, sowie einem Befestigungssteg 35 mit einer Bohrung 36. Eine Gleit-Klemm-Wand 34 ist mit einem runden Umlenksteg versehen, der schräg verlaufend angeordnet sein Kann, um einen räumlich schrägen Gurtauszug zu ermöglichen. Mit ihren Kegelflächen 20 liegen die Klemmkeile 3' (oben und unten) gegen je 2 Sensorkugel 10 an. Sie sind von Sensormassen 11' und 11'' umgeben, wobei die obere mittels Federn schwimmend aufgehängt sein kann.

Im Falle der Aktivierung werden die beiden Klemmkeile gegen das Gurtband 18 ausgelenkt. Es entsteht dabei ein Mitnahme- und Selbstverstärkungseffekt, wenn das Gurtband 18 weiterhin ausziehend in Richtung der Pfeile 38 belastet wird. Durch die beidseitige Klemmung entsteht eine geringere spezifische Belastung für das Gurtband 18. Der besondere Vorteil liegt in der schmalen Bauweise, die eine realistische Einsatzmöglichkeit in der B-Säule des Kfz ermöglicht. Durch den gewählten Keilwinkel (ca. 25°) und die Gleitbeschichtungen ist eine Deblockierung in den Ruhezustand nach Lastrückgang und Einzug des Gurtbandes gewährleistet.

## Patentansprüche

1. Selbstsensorische Klemmvorrichtung (1) mit einem im Unfall ab vorgegebenen Verzögerungswerten aktivierbaren Klemmelement (3), welches über fahrzeugsensitive Auslöseglieder (10,11) direkt in eine Sperrstellung verfahrbar ist und die in Kombination mit einem darunter angeordneten gurtband- und/oder fahrzeugsensitiv sperrbaren Aufroller in einem Sicherheitsgurtsystem unabhängig von diesem wirkt,
**dadurch gekennzeichnet,**
daß ein Klemmkeil (3) mit Kegelflächen (20) auf zwei am äußeren Rand angeordneten Sensorkugeln (10) aufliegt, die ihrerseits innerhalb einer Sensormasse (11) angeordnet sind und in Kegelflächen (20') eines Lagers (13) ruhen.

2. Klemmvorrichtung nach Anspruch 1, dadurch gekennzeichnet, daß im unteren Bereich des Klemmgehäuses (2) ein Lager (13) angeordnet ist, in dessen Kegelflächen (20') die Sensorkugeln (10) lagern und das im Bereich des Gurtbandes (18) einen Führungsschlitz aufweist, sowie das Gegenlager einer Zugfeder (26) bildet, die den Klemmkeil (3) in Ruheposition hält.

3. Klemmvorrichtung nach Anspruch 1, dadurch gekennzeichnet, daß der Klemmkeil (3) aus Kunststoff besteht, vorzugsweise aus einem Duromer und ganzflächig mit einer dünnen Gleitbeschichtung, vorzugsweise auf PTFE-Basis, versehen ist.

4. Klemmvorrichtung nach Anspruch 1, dadurch gekennzeichnet, daß der Klemmkeil (3) in einem einstückigen mit widerstanderhöhenden Rippen (7, 7') versehenen Klemmgehäuse (2) verschiebbar und geführt gelagert ist, wobei mindestens die Druckfläche (8) und die Schrägfläche (9) ebenfalls mit einer dünnen Gleitbeschichtung versehen sind.

5. Klemmvorrichtung nach Anspruch 1, dadurch gekennzeichnet, daß im oberen Gurtaustrittsbereich des Klemmgehäuses (2) eine Umlenkrolle (14) angeordnet ist.

6. Klemmvorrichtung nach Anspruch 5, dadurch gekennzeichnet, daß die Achse (15) der Umlenkrolle (14) als Sollbruchstelle ausgebildet ist und das Gurtband (18b) ab einer bestimmten Gurtzugskraft durch Wegbrechen der Achse (15) gegen die Verzahnung (5) des Klemmkeils (3) gelangt.

7. Klemmvorrichtung nach Anspruch 6, dadurch gekennzeichnet, daß die Achse (15) der Umlenkrolle (14) federvorgespannt in Langlöchern (27) des Klemmgehäuses (2) gelagert ist und das Gurtband (18b) ab einer bestimmten Gurtzugskraft durch Ausweichen der Umlenkrolle (14) gegen die Verzahnung (5) des Klemmkeils (3) gelangt.

8. Klemmvorrichtung nach Anspruch 1, dadurch gekennzeichnet, daß zwei identische Klemmkeile (3') übereinander und mit ihren schrägen Gleitflächen (4') zueinander in einem Klemmgehäuse (2') geführt und federbelastet angeordnet sind, und daß diese Einheit als selbstsensorische Umlenkklemmer-Vorrichtung (1') wirkt.

9. Klemmvorrichtung nach Anspruch 8, dadurch gekennzeichnet, daß beide Klemmkeile (3') über die Kraft einer Feder (29) gegen die Sensorkugeln (10') nach oben bzw. unten gedrückt und dabei von einem mit Spiel arbeitenden Feder-Nut-System (30, 31) geführt werden.

10. Klemmvorrichtung nach den Ansprüchen 8 und 9, dadurch gekennzeichnet, daß die obere Sensormasse (11'') leichter ist als die untere Sensormasse (11') und/oder über Federn schwimmend aufgehängt ist.

## Claims

1. A self-detecting clamping device (1), with a clamping element (3) that can be activated in an accident after preset delay values, which can be directly moved into a locking position via vehicle-sensitive tripping elements (10,11) and which operates in a safety belt system in combination with a winder arranged below it that is lockable in response to the belt and/or vehicle, independently of the latter,
**characterized in that**
a clamping wedge (3) bears with conical surfaces (20) on two sensor balls (10) arranged at the outer edge, which for their part, are arranged in a sensor mass (11) and rest in conical surfaces (20') of a bearing (13).

2. A clamping device according to claim 1, characterized in that a bearing (13) is arranged in the lower zone of the clamp housing (2), in whose conical surfaces (20') the sensor balls (10) are mounted, and which has a guide slot in the zone of the belt (18), and which forms the bearing means of a tension spring (26) which retains the clamping wedge (3) in its rest position.

3. A clamping device according to claim 1, characterized in that the clamping wedge (3) consists of a synthetic material, preferably of a duromer and is provided over its whole surface with a thin, preferably PTFE-based antifriction coating.

4. A clamping device according to claim 1, characterized in that the clamping wedge (3) is mounted for guided displacement in an integral clamp housing (2) provided with strengthening ribs (7, 7'), in which arrangement, at least the thrust face (8) and the inclined face (9) are also provided with a thin antifriction coating.

5. A clamping device according to claim 1, characterized in that in the upper belt outlet zone of the clamp housing (2), there is arranged a guide roller (14).

6. A clamping device according to claim 5, characterized in that the pin (15) of the guide roller (14) is designed as a predetermined breaking point and that the belt (18b) passes as from a specified belt tension against the tooth system (5) of the clamping wedge (3) because the pin (15) has been broken off.

7. A clamping device according to claim 6, characterized in that the pin (15) of the guide roller (14) is mounted with spring preloading in slots (27) of the clamp housing (2), and that the belt (18b) passes as from a specified belt tension against the tooth system (5) of the clamping wedge (3) because of the displacement of the guide roller (14).

8. A clamping device according to claim 1, characterized in that two identical clamping wedges (3') are guided and arranged on top of one another in a clamp housing (2'), with spring loading and with their inclined sliding faces (4') facing each other, and that this unit is acting as a self detecting clamping device (1') blocking any turn-round.

9. A clamping device according to claim 8, characterized in that both clamping wedges (3') are pressed upwards or downwards by the force of a spring (29) against the sensor balls (10') and are in this arrangement guided in a tongue and groove system (30, 31) that operates with play.

10. A clamping device according to claims 8 and 9, characterized in that the upper sensor mass (11'') is lighter than the lower sensor mass (11') and/or is suspended by springs in a floating mode.

## Revendications

1. Dispositif auto-détecteur de blocage (1) comportant un élément de blocage (3) qui, en cas d'accident, peut être activé à partir de valeurs de décélération déterminées, lequel élément de blocage pouvant être déplacé moyennant des éléments de déclenchement (10, 11) sensibles aux mouvements du véhicule, directement dans une position de blocage et qui, en combinaison avec un enrouleur bloquant, sensible aux mouvements de la ceinture et/ou du véhicule, disposé au-dessous de l'élément de blocage, agit dans un système de ceinture de sécurité indépendamment de ce dernier,
**caractérisé en ce que**
une cale de blocage (3) avec des surfaces coniques (20) s'appuie sur deux billes de capteur (10) disposées sur le bord extérieur, qui à leur tour sont disposées à l'intérieur d'une masse d'inertie et reposent sur les surfaces coniques (20') d'un roulement (13).

2. Dispositif de blocage selon la revendication 1, caractérisé en ce que, dans la zone inférieure du boîtier de blocage (2), un roulement (13) est disposé dans les surfaces coniques (20') duquel les billes de capteur (10) sont logées et qui, dans la zone de la ceinture (18), présente une fente de guidage et forme le roulement en butée d'un ressort de traction (26) qui maintient la cale de blocage (3) en position de repos.

3. Dispositif de blocage selon la revendication 1, caractérisé en ce que la cale de blocage (3) est en plastique, de préférence en un duromère, et est pourvue sur toute sa surface d'une couche de glissement mince, de préférence à base de PTFE.

4. Dispositif de blocage selon la revendication 1, caractérisé en ce que la cale de blocage (3) est logée de manière à pouvoir être déplacée et guidée dans un boitier de blocage (2) d'une pièce, présentant des nervures (7, 7') qui augmentent la résistance, la surface de pression (8) au moins et la surface oblique (9) étant également pourvues d'une couche de glissement mince.

5. Dispositif de blocage selon la revendication 1, caractérisé en ce que, dans la zone de sortie supérieure de la ceinture du boîtier de blocage (2), une poulie de renvoi (14) est disposée.

6. Dispositif de blocage selon la revendication 5, caractérisé en ce que l'axe (15) de la poulie de renvoi (14) est formée comme point de rupture programmé et que la ceinture (18b) est mise en contact avec la denture (5) de la cale de blocage (3) à partir d'une force de traction déterminée, exercée sur la ceinture à la suite de la rupture de l'axe (15).

7. Dispositif de blocage selon la revendication 6, caractérisé en ce que l'axe (15) de la poulie de renvoi (14) est précontraint par un ressort et est logé dans des trous oblongs (27) du boîtier de blocage (2), et que la ceinture (18b) est mise en contact avec la denture (5) de la cale de blocage (3) par la déviation de la poulie de renvoi (14) à partir d'une force de traction déterminée sur la ceinture.

8. Dispositif de blocage selon la revendication 1, caractérisé en ce que deux cales de blocage (3') identiques sont disposées l'une au-dessous de l'autre et sont disposées de manière à être guidées et contraintes par un ressort dans un boîtier de blocage (2') par l'intermédiaire de leur surface de glissement (4') oblique et que cette unité agit comme un dispositif auto-détecteur de blocage à renvoi (1').

9. Dispositif de blocage selon la revendication 8, caractérisé en ce que les deux cales de blocage (3') sont pressées vers le haut et vers le bas par l'intermédiaire de la force d'un ressort (29) contre les billes de capteur (10') et sont dans ce mouvement guidées par un système de ressort/rainure (30, 31) travaillant avec un certain jeu.

10. Dispositif de blocage selon les revendications 8 et 9, caractérisé en ce que la masse d'inertie supérieure (11'') est plus légère que la masse d'inertie inférieure (11') et/ou est suspendue de manière flottante par des ressorts.
